# EUROPÄISCHE PATENTSCHRIFT

(11) **EP 2 686 566 B1**
(45) Veröffentlichungstag und Bekanntmachung des Hinweises auf die Patenterteilung: **03.05.2017**
(21) Anmeldenummer: 12706551.4
(22) Anmeldetag: 27.02.2012
(51) Int. Cl.: F16C 43/06, F16C 19/38, F16C 33/51

(54) **WÄLZLAGER MIT LATERALER BEFÜLLÖFFNUNG**
ROLLING BEARING WITH A LATERAL FILLING OPENING
ROULEMENT DOTÉ D'UNE OUVERTURE LATÉRALE DE REMPLISSAGE

(30) Priorität: 17.03.2011 DE 102011005725
(43) Veröffentlichungstag der Anmeldung: 22.01.2014
(73) Patentinhaber: Schaeffler Technologies AG & Co. KG, 91074 Herzogenaurach (DE)
(72) Erfinder: NAGENGAST, Gerhard, 91336 Heroldsbach (DE); HESTERMANN, Jörg-Oliver, 91086 Aurachtal (DE)
(86) Internationale Anmeldenummer: PCT/EP2012/053228
(87) Internationale Veröffentlichungsnummer: WO 2012/123239

(56) Entgegenhaltungen:
- DE-A1- 4 343 277
- DE-U1-202007 014 770
- US-A- 1 970 699
- US-A- 3 948 578
- US-A- 3 995 919
- US-A- 4 787 758

## Beschreibung

### Gebiet der Erfindung

Die Erfindung betrifft ein Wälzlager mit einem einteiligen äußeren Lagerring und einem einteiligen inneren Lagerring sowie mit zwischen den Lagerringen in mindestens einer Reihe angeordneten Wälzkörpern gemäß dem Oberbegriff des Anspruchs 1.

### Hintergrund der Erfindung

Gattungsgemäße Wälzlager werden als Axial-Radiallager bzw. Kippmomentlager in Werkzeugmaschinen, wie etwa in Rundtischen genutzt. Sie kommen aber auch dort zum Einsatz, wo geringere Anforderungen an die Wälzlager gestellt werden, beispielsweise in Drehachsen von Handhabungsautomaten oder von Solar-Panels.

Bekannte Wälzlagertypen für derartige Einsatzzwecke sind Axial-Radial-Zylinderrollenlager, Kreuzrollenlager oder Schrägrollenlager, die jedoch teilweise nachteilige Eigenschaften haben. So besitzen solche Zylinderrollenlager in der Regel eine geringe Eignung für hohe Drehzahlen und weisen wegen ihrer üblich mehrteiligen Bauweise strukturelle Nachteile in ihrer Steifigkeit auf. Die genannten Kreuzrollenlagertypen haben nur eine eingeschränkte Tragfähigkeit, Steifigkeit und Eignung für hohe Drehzahlen. Bekannte gattungsgemäße Schrägrollenlager weisen ebenso wie Kreuzrollenlager nachteilig Füllstopfen zum Verschließen von Einfüllöffnungen in den Lagerringen auf, sind oft nicht anschraubbar, bilden keine bauliche Einheit und sind somit in der bekannten Form nur bedingt für Werkzeugmaschinen geeignet.

So sind aus der DE 10 2007 013 944 A1 zweireihige Schrägrollenlager mit einem einteiligen äußeren Lagerring und einem einteiligen inneren Lagerring bekannt, zwischen denen in zwei Reihen zylindrische Wälzkörper in O-Anordnung angeordnet sind. Die Befüllung dieser Schrägrollenlager mit den Wälzkörpern erfolgt über eine schräg nach radial außen in den äußeren Lagering und eine schräg nach radial innen in den inneren Lagerring eingebrachte Einfüllöffnung. Nach dem Einfüllen der Wälzkörper in den Zwischenraum zwischen den Lagerringen werden die Einfüllöffnungen mit Füllstopfen verschlossen. Die Füllstopfen sind als Kunststoffkugel oder als spanlos gefertigtes Zentrierlager gefertigt. Nachteilig bei diesen Schrägrollenlagern ist, dass die Wälzkörper beim Passieren der Einfüllöffnungen ihre Laufbahnen in ihrer Hauptkraftrichtung kurzzeitig verlassen und mit dem jeweiligen Füllkörper in Kontakt geraten, um dann anschließend wieder auf die Wälzkörperlaufbahn aufzusetzen. Diese kurze Unterbrechung im gleichmäßigen Ablauf der Wälzkörper, und der Umstand, dass durch die zylinderförmige Füllstopfenöffnung beim Füllen der Laufbahnen keine bzw. nur sehr kleine Distanzstücke zwischen den Wälzkörpern eingebracht werden können, verhindert hohe Drehzahlen, reduziert die maximale Tragfähigkeit des Lagers und fördert dessen Verschleiß.

In der DE 11 2004 000 625 T5 sind ebenfalls verzahnte Kreuz-Wälzkörperlagerungen offenbart, bei denen ein innerer Lagerring und ein äußerer Lagering jeweils mit einer Einfüllöffnung zum Aufnehmen der Wälzkörper versehen sind, welche nach dem Einfüllen der Wälzkörper jeweils mit einem Füllstopfen verschlossen werden. Auch diese Lager weist die bereits genannten Nachteile auf.

Außerdem ist aus der DE 43 43 277 A1 ein einreihiges Zylinderrollenlager bekannt, mit einem einteiligem Innenring sowie einem einteiligen Außenring, zwischen denen zylindrische Wälzkörper angeordnet sind. Der Außenring weist eine trapezförmige Aussparung auf, in der ein ebenso geformtes Verschlussstück befestigbar ist. Bei entferntem Verschlussstück können die Wälzkörper durch die Aussparung im Außenring in einen Zwischenraum zwischen den beiden Lagerringen eingesetzt werden. Anschließend wird dieser Zwischenraum durch Aufsetzen und Befestigen des Verschlussstücks am Außenring verschlossen.

Weiter ist aus der US 3,948,578 A ein zweireihiges Zylinderrollenlager bekannt, mit einem einteiligen äußeren Lagerring und einem einteiligen inneren Lagerring sowie mit zwischen den beiden Lagerringen in zwei Reihen angeordneten zylindrischen Wälzkörpern, bei dem der äußere Lagerring stirnseitig zwei Aussparungen aufweist, durch welche die Wälzkörper in den Raum zwischen den Lagerringen einfüllbar sind, bei dem die Aussparungen jeweils mit einem reversibel befestigbaren Verschlussstück abdeckbar sind, bei dem die Wälzkörpern auf Laufbahnen abwälzen, welche unter einem Winkel geneigt zur Lagerlängsachse ausgerichtet sind, bei dem die jeweilige Verschlussstücke Borde zur Führung der Wälzkörper aufweisen, bei dem die Ablauffläche der Borde der Verschlussstücke senkrecht zur Wälzkörperdrehachse ausgerichtet ist, bei dem die Wälzkörper beider Wälzkörperreihen radial innen auf Laufbahnen abrollen, welche am inneren Lagerring ausgebildet sind, und bei dem die Wälzkörper beider Wälzkörperreihen radial außen auf Laufbahnen abrollen, welche am äußeren Lagerring ausgebildet sind.

Nachteilig an diesem letztgenannten Wälzlager ist, dass sich dessen Wälzkörper mit ihren Stirnseiten über jeweils einen Wälzkörperkäfig an dem äußeren Lagerring beziehungsweise an den dort angeordneten beiden Verschlussstücken abstützen. Zudem benötigt dieses Wälzlager zwei Dichtringe, welche den die Wälzkörper und die Wälzkörperkäfige aufnehmenden Zwischenraum zwischen den beiden Lagerringen abdichten. Schließlich wird es als nachteilig beurteilt, dass die ein Schmiermittel aufnehmenden Zwischenräume zwischen den Wälzkörpern aufgrund der dort angeordneten Käfigbauteile vergleichsweise klein sind.

Schließlich ist aus der DE 20 2007 014 770 U1 ein Wälzlagerkäfig bekannt, der aus einem Kunststoff herstellbar ist und Taschen zur Aufnahme von zylindrischen Wälzkörpern aufweist. Dieser Wälzlagerkäfig ist aus einer Mehrzahl von Käfigsegmenten aufgebaut, welche endseitig jeweils Rastmittel aufweisen, die miteinander zur Bildung des Wälzlagerkäfigs verbindbar sind.

### Aufgabe der Erfindung

Der Erfindung liegt die Aufgabe zugrunde, ein über zumindest eine Öffnung mit Wälzkörpern befüllbares Zylinderrollenlager der aus der US 3,948,578 A bekannten Art vorzustellen, bei dem die Verwendung eines Füllstopfens zum Verschließen der Öffnung nicht notwendig ist, und bei dem eine nur einseitig abstimmbare Auslegung, also entweder drehzahl- oder steifigkeitsoptimiert, vermieden wird. Außerdem soll das Zylinderrollenlager im Bereich der Wälzkörper vergleichsweise große Räume zur Aufnahme eines Schmiermittels aufweisen sowie kostengünstig herstellbar sein.

### Zusammenfassung der Erfindung

Der Erfindung liegt die Erkenntnis zugrunde, dass durch die Ausbildung einer gut zugänglichen und gut einsehbaren stirnseitigen Aussparung in einem Lagerring die zylindrischen Wälzkörper einfacher und sicherer als bisher in das Wälzlager einfüllbar sind, und dass durch ein reversibles Abdecken der Einfüllöffnung mit einem Verschlussstück auf die Verwendung von Füllstopfen verzichtet werden kann, Die stirnseitigen Aussparungen und deren Verschlussstücke liegen außerhalb der Hauptlastrichtung, werden von den Wälzkörpern nicht überrollt, schwächen dadurch nicht die Tragfähigkeit des Lagers und erlauben die Einbringung größerer Käfiglösungen als durch die bekannten Füllstopfenbohrungen. Außerdem ermöglich die Nutzung von Käfigsegmenten, welche die Wälzkörper des Zylinderrollenlagers in Taschen aufnehmen und gegeneinander auf Abstand halten, im Vergleich zu einem geschlossenen konventionellen Käfig größere Räume im Bereich der Wälzkörper zur Aufnahme von Schmiermittels, Schließlich ermöglichen die Käfigsegmente ein vergleichsweise leichtes Einführen derselben durch die Aussparungen in den Lagerringen hinein in den radialen Spalt zwischen dem inneren und dem äußeren Lagerring.

Die Erfindung geht demnach aus von einem Wälzlager mit einem einteiligen äußeren Lagerring und einem einteiligen inneren Lagerring sowie mit zwischen den Lagerringen in zwei Reihen angeordneten zylindrischen Wälzkörpern, bei dem der äußere Lagerring und/oder der innere Lagerring stirnseitig zwei Aussparungen aufweist, durch welche die Wälzkörper in den Raum zwischen den Lagerringen einfüllbar sind, und bei dem die Aussparungen jeweils mit einem reversibel befestigbaren Verschlussstück abdeckbar sind, bei dem die Wälzkörpern auf Laufbahnen abwälzen, welche unter einem Winkel geneigt zur Lagerlängsachse ausgerichtet sind, bei dem die jeweilige Verschlussstücke Borde zur Führung der Wälzkörper aufweisen, bei dem die Anlauffläche der Borde der Verschlussstücke senkrecht zur Wälzkörperdrehachse ausgerichtet ist, bei dem die Wälzkörper beider Wälzkörperreihen radial innen auf Laufbahnen abrollen, welche am inneren Lagerring ausgebildet sind, und bei dem die Wälzkörper beider Wälzkörperreihen radial außen auf Laufbahnen abrollen, welche am äußeren Lagerring ausgebildet sind.

Zur Lösung der gestellten Aufgabe ist bei diesem Wälzlager vorgesehen, dass sich bei beiden Wälzkörperreihen die zylindrischen Wälzkörper jeweils mit ihrer ersten axialen Stirnfläche unmittelbar an jeweils einem zugeordneten Bord am inneren Lagerring abstützten, dass sich die zylindrischen Wälzkörper beider Wälzkörperreihen mit ihrer zweiten Stirnfläche unmittelbar an einem zugeordneten Bord am äußeren Lagerring und im Bereich der Aussparungen unmittelbar an der Anlauffläche des Bordes des jeweils zugeordneten Verschlussstücks abstützten, dass die Verschlussstücke sowie die zugeordneten Aussparungen so groß sind, dass in die Aussparungen Käfigsegmente einführbar sind, welche Taschen zur beabstandeten Aufnahme von Wälzkörpern aufweisen, dass die Käfigsegmente so ausgebildet sind, dass die komplette Lauffläche des Wälzkörpers genutzt werden kann, dass die Käfigsegmente radial gekröpft ausgebildet sind, und dass die Käfigsegmente eine Dicht- bzw. Anlaufleiste aufweisen.

Im Gegensatz zu bekannten gattungsgemäßen Wälzlagern mit einem Füllstopfen befindet sich das Verschlussstück bei dem Wälzlager gemäß der Erfindung nicht innerhalb eines Einfüllkanals für die Wälzkörper in der Hauptlastrichtung des Lagers, sondern am axialen und radialen Ende der zugeordneten Wälzkörperlaufbahnen. Dadurch können ein Lagerkäfig oder die Wälzkörper direkt, nahezu lastfrei und reibungsarm an einem solchen Verschlussstück axial anlaufen.

Ein weiterer Vorteil des erfindungsgemäßen Wälzlagers ist es, dass der innere und der äußere Lagerring einteilig ausgebildet sind. Die kompakten Abmessungen vor allem in der axialen Länge des Wälzlagers ermöglichen zudem eine Rundachsenlagereinheit mit verbesserten Gebrauchseigenschaften, wie beispielsweise ohne störende Füllstopfen in der Wälzkörperlaufbahn bzw. Hauptlastrichtung,
Bei einer Ausführungsform der Erfindung ist vorgesehen, dass die Wälzkörper in O-Anordnung gegeneinander angestellt sind, und dass der äußere Lagerring zwei Aussparungen aufweist, die mit jeweils einem Verschlussstück reversibel abdeckbar bzw. verschließbar sind, wobei die Verschlussstücke Borde bilden, welche die Wälzkörper axial führen.
Gemäß einer weiteren Ausführungsform kann alternativ dazu vorgesehen sein, dass die Wälzkörper in X-Anordnung gegeneinander angestellt sind, und dass der innere Lagerring zwei Aussparungen aufweist, die mit jeweils einem Verschlussstück reversibel abdeckbar sind, wobei die Verschlussstücke Borde bilden.
Die genannten Anlauffläche dieser Borde für die Wälzkörper sind bevorzugt senkrecht zur Wälzkörperdrehachse ausgebildet. Denkbar ist ebenso, dass die genannten Anlaufflächen dieser Borde unter einem Winkel etwas größer als 90° zur Wälzkörperdrehachse ausgebildet sind, d.h. als Schrägborde ausgeführt sind.
Ein solches zweireihiges Schrägrollenlager, zeichnet sich durch einteilige und damit eigensteife Lagerringe aus, deren Laufbahnen in Belastungsrichtung nicht durch einen Füllstopfen unterbrochen sind. Die Laufbahnen sind durch die seitlichen Verschlussstücke gut zugänglich und ermöglichen dadurch ein einfacheres Befüllen des Wälzlagers mit den Wälzkörpern als bisher durch enge Füllkanäle mit schlechter Sicht und Einflussmöglichkeit auf die lagerichtige Position der Wälzkörper im radialen Laufbahnspalt zwischen den Lagerringen.
Gemäß einer weiteren Ausführungsform ist vorgesehen, dass die genannten Aussparungen umfangsbezogen gegenseitig versetzt angeordnet mit jeweils einem Verschlussstück reversibel abdeckbar bzw. verschließbar sind.
Wie beschrieben ist vorgesehen, dass das wenigstens eine Verschlussstück und die zugeordnete Aussparung so groß sind, dass durch die wenigstens eine Aussparung Wälzkörper beabstandende Käfigsegmente zwischen die Lagerringe einführbar sind. Die relativ breite seitliche Öffnung des Lagers ermöglicht demnach das Einbringen von ganzen Käfigsegmenten ohne Unterbrechung oder Schwächung der Laufbahngeometrie in der Kraftflussrichtung.

Das Verschlussstück ist vorzugsweise mit einem Fixierelement an dem Lagerring reversibel fixierbar. Als Fixierelement kann eine Schraube, ein Stift oder ein anderes zum Fixieren des Verschlussstücks an dem Lagerring geeignetes Bauteil dienen. Ist das Fixierelement eine Schraube, dann weist der Lagerring in seiner zugeordneten Stirnseite eine Bohrung mit einem Gewinde zur Aufnahme der Schraube auf.
Statt der üblicherweise bei Kreuz-Schrägrollenlagern in dem Laufbahnspalt angeordneten Distanzstücken, die zusammen mit den Wälzkörpern den komplett zur Verfügung stehenden Raum im Lagersystem benötigen, sind gemäß der Erfindung die Wälzkörper in Käfigsegmenten aufgenommen, die die Wälzkörper zueinander auf Abstand halten.
Die Käfigsegmente nehmen vorzugsweise jeweils zwei Wälzkörper in entsprechenden Taschen auf und werden radial an dem äußeren und dem inneren Lagerring geführt. Durch Stege an den Käfigsegmenten werden die Wälzkörper sicher und reibungsarm voneinander beabstandet sowie durch diese Stege in Umfangsrichtung geführt, und lassen außerdem zwischen den Wälzkörpern viel Platz zur Aufnahme von Schmiermittel. Dies erhöht die Gebrauchsdauer, die Funktionssicherheit und die Eignung des Wälzlagers für höhere Drehzahlen.
Die Käfigsegmente sind radial gekröpft ausgebildet, um eine möglichst große Laufbahnbreite zu ermöglichen, was zudem ihre Stabilität erhöht. Vorzugsweise sind die Käfigsegmente derartig ausgebildet, dass die komplette Lauffläche des Wälzkörpers genutzt werden kann.
Die Käfigsegmente weisen wie erwähnt stirnseitig, eine Dicht- bzw. Anlaufleiste oder einen Dicht- bzw. Anlaufsteg auf, wodurch die Reibung der jeweiligen Käfigsegmente an dem Bord des Verschlussstücks minimiert wird. Die Dicht- bzw. Anlaufleisten der Käfigsegmente übernehmen zugleich eine Dichtfunktion gegen einen Schmiermittelaustritt bzw. verhindern einen Schmutzeintritt zwischen dem äußerem und dem innerem Lagerring. Die Käfigsegmente bestehen vorzugsweise aus einem Kunststoff und lassen sich bei Bedarf beim Einführen in den Laufbahnspalt mit den jeweils benachbarten Käfigsegmenten verrasten. Hierzu ist vorgesehen, dass die Käfigsegmente an ihren Enden Rastmittel aufweisen, mit denen diese mit benachbarten Käfigsegmenten verbindbar sind.

Alternativ dazu können die Käfigsegmente auch in anderen Werkstoffen, abgestimmt auf den jeweiligen Lagereinsatz, ausgeführt sein, z.B. in Messing oder Aluminium für höhere Temperaturen oder erhöhte mechanische Belastungen. Die besondere abgewinkelte Taschenform der Segmente bewirkt die eigene Abstützung am Wälzkörper, so dass der Käfig weitgehend durch die Wälzkörper geführt ist, wodurch die Breite der Laufbahnen in weiten Bereichen konstruktiv einsatzbezogen frei ausgeführt sein kann. Beispielsweise kann durch ein gezieltes Freistellen der Bordseiten mehr Freiraum zur Fettspeicherung gewonnen werden, oder durch beliebige Schrägstellung oder Breitenauslegung der Laufbahnen das Lager für weitere Drehzahlsteigerungen durch Reibungsminimierung optimiert werden.
So kann vorgesehen sein, dass die Borde am Innenring, am Außenring und/oder an den Verschlussstücken derartig ausgebildet sind, dass diese die Wälzkörper nur an einem Teil ihrer axialen Stirnseite berühren, und dass entlang des verbleibenden Teils ihrer axialen Stirnseite in den Borden und/oder in den Lagerringen Taschen zur Aufnahme eines Schmiermittels ausgebildet sind.

Die seitlichen Verschlussstücke werden bevorzugt bereits in der Weichbearbeitungsphase (Drehen und Bohren) des betroffenen Lagerrings in dessen Planfläche eingebracht und verbleiben darin für die weitere Bearbeitung, wie Härten und Schleifen bzw. Endbearbeitung am Lagerring. Zusammen mit den Fixierelementen, beispielsweise Senkkopfschrauben, ist damit die wichtige reproduzierbare Positionierung der Verschlussstücke für das spätere Befüllen mit Wälzkörpern in der Montage sicher gewährleistet. Bei Demontage der Verschlussstücke für das Befüllen der Wälzlager mit Käfigsegmenten und Wälzkörpern sowie deren anschließende Befestigung am Lagerring ist dadurch auch gewährleistet, dass sich keine funktionsstörenden Übergänge an den Borden ergeben. Die Wälzkörper und Käfigsegmente gleiten daher stufenlos und stets gleichmäßig stoßfrei über eine immer wieder reproduzierbare Trennfläche im Bereich der Einfüllöffnung des jeweiligen Lagerrings.

### Kurze Beschreibung der Zeichnungen

Die Erfindung wird nachfolgend anhand der beiliegenden Zeichnung an zwei Ausfuhrungsformen weiter erläutert. Darin zeigt
- Fig. 1: eine axiale Draufsicht auf ein erfindungsgemäßes Schrägrollenlager,
- Fig. 2: einen Querschnitt an der Linie A-A durch das in Fig. 1 gezeigte Schrägrollenlager,
- Fig. 3: eine dreidimensionale Darstellung eines Käfigsegments, und
- Fig. 4: eine Draufsicht auf ein gegenüber Fig. 1 etwas abgewandeltes Schrägrollenlager.

### Detaillierte Beschreibung der Zeichnungen

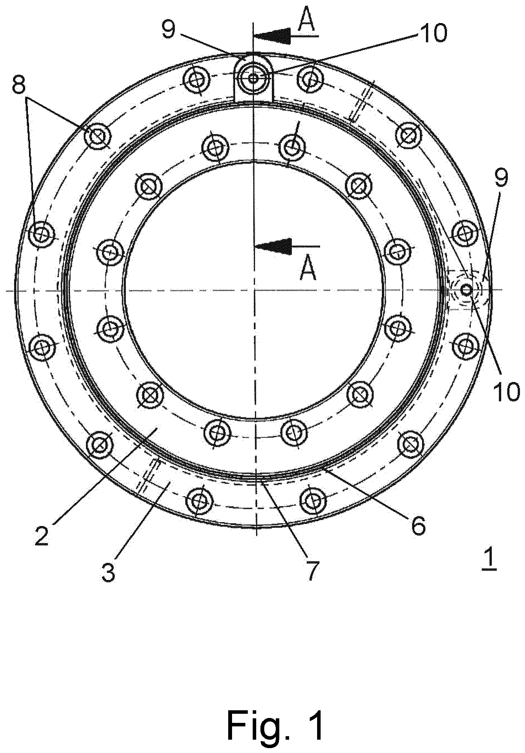

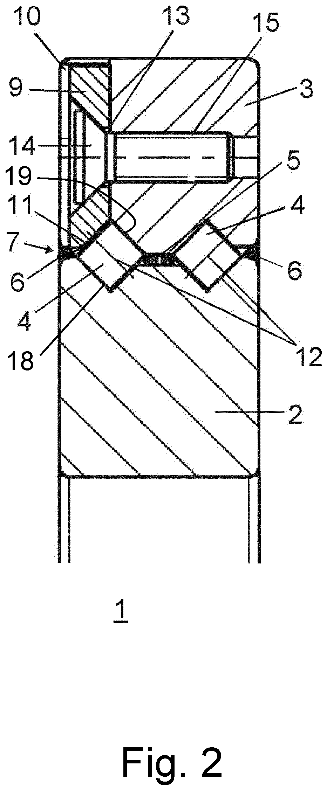

Fig. 1 zeigt in einer stirnseitigen Ansicht und Fig. 2 in einem Längsschnitt gemäß der Linie A-A der Fig. 1 ein erfindungsgemäßes Wälzlager 1 in der Ausführung als Schrägrollenlager mit zwei Wälzkörperreihen in O-Anordnung, mit einem einstückigen inneren Lagerring 2 und einem einstückigen äußeren Lagerring 3. Zwischen den Lagerringen 2, 3 sind in Käfigsegmenten 5 aufgenommene zylindrische Wälzkörper 4 angeordnet. Die Käfigsegmente 5 besitzen eine Dicht- bzw. Anlaufleiste 6, die dem axialen Anlaufen der Käfigsegmente 5 an einem Lagerringbord sowie an dem stirnseitigen Verschlussstück 9 dienen und die Wälzkörper damit axial führen, und die außerdem den zwischen den Lagerringen 2, 3 ausgebildeten Spalt 7 abdichten.

Der innere und der äußere Lagerring 2, 3 weisen gemäß der Stirnseitenansicht der Fig. 1 eine Vielzahl von stirnseitigen Bohrungen 8 auf, die der Aufnahme von Befestigungsmitteln wie Schrauben dienen, mit denen die Lagerringe 2, 3 beim Einbau des Wälzlagers 1, beispielsweise in eine Werkzeugmaschine, an drehenden bzw. feststehenden Bauteilen befestigt werden können.

Ist das erfindungsgemäße Walzlager 1 als zweireihiges Schrägrollenlager in O-Anordnung ausgebildet, wie in den Figuren 1, 2 und 4 dargestellt, so weist es für jede Lagerreihe jeweils mindestens ein seitliches Verschlussstück 9 auf, welches sich umfänglich um einen kleinen Bereich erstreckt, so dass eine axial dahinter ausgebildete Einfüllöffnung im äußeren Lagerring 3 für die Wälzkörper 4 abgedeckt ist. Hierdurch wird ein seitliches Befüllen über die weniger belastete und damit weniger kritische axiale Laufbahnbreite (Bord) ermöglicht.

In der in Fig. 1 gezeigten Ausführungsform der Erfindung sind die Verschlussstücke 9 zueinander um 90° versetzt angeordnet und mit einer Senkkopfschraube als Fixierelement 10 lösbar befestigt.

Die Fig. 2 zeigt das erfindungsgemäße Wälzlager 1 als vorgespanntes, zweireihiges, axial kurz bauendes Schrägrollenlager in O-Anordnung mit zwei einfachen Schrägrollenlaufbahnen 18, 19 an einteiligen Innen- und Außenringen 2, 3. Die Wälzkörper 4 sind in O-Anordnung gegeneinander angestellt und vorgespannt, wodurch die beiden Laufbahnen 18, 19 im inneren Lagerring 2 und äußeren Lagerring 3 kostengünstig mit demselben Abricht-Diamantwerkzeug im Geradeinstrich gefertigt werden können. Durch das seitliche Verschlussstück (bzw. Verschlussdeckel) 9 kann das Wälzlager 1 bei dessen Montage gut zugänglich von der Seite aus mit Wälzkörper 4 befüllt werden. Die Laufbahnen 18, 19 können dadurch ohne Füllstopfen auskommen und damit unterbrechungsfrei sowie funktionssicher höhere Belastungen als mit Füllstopfen aufnehmen.

Wie Fig. 2 zeigt, ist das Verschlussstück 9 in einer Aussparung 10 des äußeren Lagerringes 3 angeordnet. Das Verschlussstück 9 bildet außerdem axial innen einen schrägen Bord 11, zu dessen wälzkörpernahen Oberfläche die jeweilige Wälzkörperdrehachse 12 senkrecht ausgerichtet ist. Dadurch zeigt die axial äußere Stirnseite der Wälzkörper 4, aufgenommen in den Käfigsegmenten 5, zu dem Bord 11 des Verschlussstücks 9.

Um das Verschlussstück 9 gegen ein Herausfallen aus der Aussparung 10 des äußeren Lagerringes 3 zu sichern, weist es eine Bohrung 13 auf, durch die das Fixierelement 14 hindurchgeführt wird und in einer Bohrung 15 im äußeren Lagerring 3, beispielsweise durch ein Gewinde, reversibel fixierbar ist.

Die Wälzkörper 4 sind, wie oben bereits erwähnt, vorzugsweise in Käfigsegmenten 5 angeordnet. Es ist aber auch möglich, Distanzstücke oder ein Käfigband als Ersatz für die Käfigsegmente 5 zu verwenden.

Die gemeinsame Anordnung von jeweils zwei Wälzkörpern 4 in einem Käfigsegment 5 und die damit entfallenden Distanzstücke in herkömmlichen Kreuz- bzw. Schrägrollenlagern ermöglichen weit größere Fetträume bei optimierten Wälzkörperanläufen. Somit ist eine höhere Betriebssicherheit bei hohen Grenzdrehzahlen möglich. Die reduzierten Kontaktflächen vermindern die Reibung und damit den Drehwiderstand des Wälzlagers 1. Sie sind zudem leichter zu montieren als einzelne Distanzstücke, die jeweils zwischen zwei benachbarten Wälzkörpern 4 positioniert werden müssen.

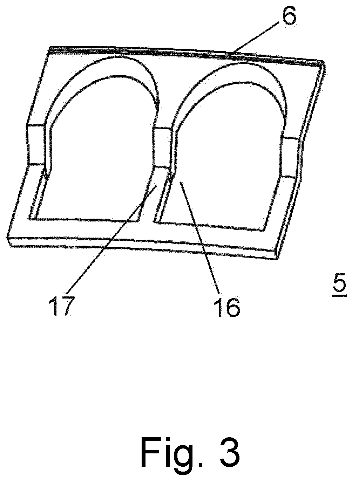

Fig. 3 zeigt eine Ausführungsform eines geeigneten Käfigsegments 5 mit einer Dicht- bzw. Anlaufleiste 6 und Käfigtaschen 16 mit für den Rollenlauf optimierten Stegen 17. Die Stege 17 sind dabei unter anderem zur Verbesserung ihrer Stabilität bezüglich ihrer Einbaulage im Wälzlager 1 radial gekröpft ausgebildet.

Das erfindungsgemäße Wälzlager 1 ist geeignet als kombiniertes Axial-Radiallager bzw. als Kippmomentlager zum Einsatz in Werkzeugmaschinen, zum Beispiel in Rundtischen, Spindellagern und Vorschubspindellagern, aber auch deren Nutzung bei Anwendungen mit geringeren Anforderungen, zum Beispiel die Lagerung von Roboterdrehachsen und von Drehachsen von Solar-Panels ist möglich.

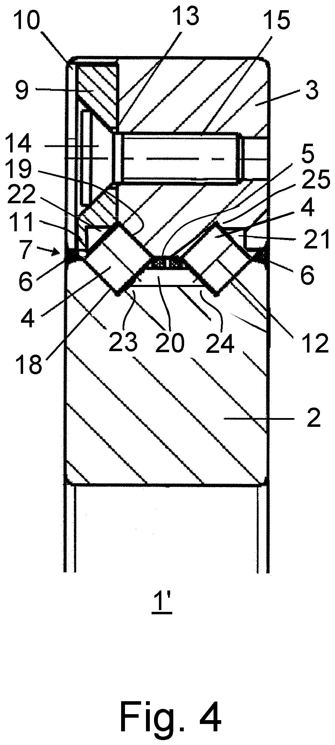

Fig. 4 zeigt ein erfindungsgemäß ausgebildetes Wälzlager 1', das weitgehend identisch ist mit dem in Fig. 1 gezeigten Wälzlager 1. Im Unterschied zu letzterem weist das Wälzlager 1' zwischen den Laufbahnen der beiden Wälzkörperreihen eine umlaufende Schmiermitteltasche 20 auf, durch die axial innen ausgebildete Borde 23, 24 des Innenrings 2 zugunsten eines insgesamt vergrößerten Schmiermittelspeicherraumes im Lager verkleinert sind. Erkennbar reicht die Anlagefläche dieser axial inneren Borde 23, 24 am Innenring nicht über die Wälzkörperdrehachse 12 hinaus. Vorzugsweise werden die axial inneren Borde 23 und 24 maximal bis zu etwa einem Drittel des Wälzkörperdurchmessers reichen, um die Reibung zu minimieren und den Schmiermittelspeicherraum im Lager zu maximieren. Lediglich bei Kreuzrollenlagern oder zweireihigen Schrägrollenlagern werden sich die jeweiligen Borde vorzugsweise über den gesamten Wälzkörperdurchmesser erstrecken.

Außerdem weist der Außenring 3 des Wälzlagers 1' im Bereich seines Bords 25 eine umlaufende Schmiermitteltasche 21 auf, so dass auch hier eine verkürzte, jedoch ausreichende axiale Abstützfläche für die Wälzkörper 4 vorhanden ist. Ebenso weist der Bord 11 des zumindest einen Verschlussstücks 9 eine umlaufende Schmiermitteltasche 22 auf, die ebenfalls eine vergleichsweise kurze, jedoch völlig ausreichende axiale Abstützfläche für die Wälzkörper 4 bildet, und den insgesamt im Wälzlager 1' vorhandenen Schmiermittelspeicherraum vergrößert.

### Bezugszeichenliste

- 1, 1': Wälzlager
- 2: Innerer Lagerring
- 3: Äußerer Lagerring
- 4: Wälzkörper
- 5: Käfigsegment
- 6: Dichtleiste, Anlaufleiste
- 7: Spalt
- 8: Bohrung
- 9: Verschlussstück
- 10: Aussparung
- 11: Bord am Verschlussstück
- 12: Wälzkörperdrehachse
- 13: Bohrung im Verschlussstück 9
- 14: Fixierelement
- 15: Bohrung im äußeren Lagerring 3
- 16: Käfigtasche
- 17: Steg
- 18: Laufbahn
- 19: Laufbahn
- 20: Schmiermitteltasche im Innenring
- 21: Schmiermitteltasche im Außenring
- 22: Schmiermitteltasche im Verschlussstück
- 23: Bord am Innenring
- 24: Bord am Innenring
- 25: Bord am Außenring

## Patentansprüche

1. Wälzlager (1, 1') mit einem einteiligen äußeren Lagerring (3) und einem einteiligen inneren Lagerring (2) sowie mit zwischen den Lagerringen (2, 3) in zwei Reihen angeordneten zylindrischen Wälzkörpern (4),
bei dem der äußere Lagerring (3) und/oder der innere Lagerring (2) stirnseitig zwei Aussparungen (10) aufweist, durch welche die Wälzkörper (4) in den Raum zwischen den Lagerringen (2, 3) einfüllbar sind, und bei dem die Aussparungen (10) jeweils mit einem reversibel befestigbaren Verschlussstück (9) abdeckbar sind,
bei dem die Wälzkörper (4) auf Laufbahnen (18, 19) abwälzen, welche unter einem Winkel geneigt zur Lagerlängsachse ausgerichtet sind,
bei dem die jeweilige Verschlussstücke (9) Borde (11) zur Führung der Wälzkörper (4) aufweisen,
bei dem die Anlauffläche der Borde (11) der Verschlussstücke (9) senkrecht zur Wälzkörperdrehachse (12) ausgerichtet ist,
bei dem die Wälzkörper (4) beider Wälzkörperreihen radial innen auf Laufbahnen (18) abrollen, welche am inneren Lagerring (2) ausgebildet sind,
und bei dem die Wälzkörper (4) beider Wälzkörperreihen radial außen auf Laufbahnen (19) abrollen, welche am äußeren Lagerring (3) ausgebildet sind, **dadurch gekennzeichnet,**
**dass** sich bei beiden Wälzkörperreihen die zylindrischen Wälzkörper (4) jeweils mit ihrer ersten axialen Stirnfläche unmittelbar an jeweils einem zugeordneten Bord am inneren Lagerring (2) abstützten,
**dass** sich die zylindrischen Wälzkörper (4) beider Wälzkörperreihen mit ihrer zweiten Stirnfläche unmittelbar an einem zugeordneten Bord am äußeren Lagerring (3) und im Bereich der Aussparungen (10) unmittelbar an der Anlauffläche des Bordes (11) des jeweils zugeordneten Verschlussstücks (9) abstützten,
**dass** die Verschlussstücke (9) sowie die zugeordneten Aussparungen (10) so groß sind, dass in die Aussparungen (10) Käfigsegmente (5) einführbar sind, welche Taschen (15) zur beabstandeten Aufnahme von Wälzkörpern (4) aufweisen,
**dass** die Käfigsegmente (5) so ausgebildet sind, dass die komplette Lauffläche des Wälzkörpers genutzt werden kann,
**dass** die Käfigsegmenten (5) radial gekröpft ausgebildet sind,
und **dass** die Käfigsegmente (5) eine Dicht- bzw. Anlaufleiste (6) aufweisen.

2. Wälzlager nach Anspruch 1, **dadurch gekennzeichnet dass** die Wälzkörper (4) in O-Anordnung gegeneinander angestellt sind, und dass der äußere Lagerring (3) zwei Aussparungen (10) aufweist, die mit jeweils einem Verschlussstück (9) reversibel abdeckbar sind, wobei die Verschlussstücke (9) Borde (11) bilden,

3. Wälzlagers nach Anspruch 1, **dadurch gekennzeichnet, dass** die Wälzkörper (4) in X-Anordnung gegeneinander angestellt sind, und dass der innere Lagerring (2) zwei Aussparungen aufweist, die mit jeweils einem Verschlussstück reversibel abdeckbar sind, wobei die Verschlussstücke Borde bilden.

4. Wälzlager nach einem der Ansprüche 1 bis 3, **dadurch gekennzeichnet, dass** die Aussparungen (10) umfangsbezogen gegenseitig versetzt angeordnet sind.

5. Wälzlager nach einem der der Ansprüche 1 bis 4, **dadurch gekennzeichnet, dass** das Verschlussstück (9) mit einem Fixierelement (14) reversibel fixierbar ist.

6. Wälzlager nach einem der Ansprüche 1 bis 5, **dadurch gekennzeichnet, dass** die Käfigsegmente (5) aus Kunststoff, Messing oder Aluminium bestehen,

7. Wälzlager nach einem der Ansprüche 1 bis 6, **dadurch gekennzeichnet, dass** die Käfigsegmente (5) an ihren Enden Rastmittel aufweisen, mit denen diese mit benachbarten Käfigsegmenten (5) verbindbar sind.

8. Wälzlager (1') nach einem der Ansprüche 1 bis 7, **dadurch gekennzeichnet, dass** die Borde (25; 11) am Außenring (3), am Innenring (2) und/oder an den Verschlussstücken (9) Schmiermitteltaschen (20, 21, 22) aufweisen.

## Claims

1. Anti-friction bearing (1, 1') having a single-piece outer bearing ring (3) and a single-piece inner bearing ring (2) and having cylindrical rolling bodies (4) which are arranged in two rows between the bearing rings (2, 3),
in which anti-friction bearing (1, 1') the outer bearing ring (3) and/or the inner bearing ring (2) have/has two cut-outs (10) on the end side, through which cut-outs (10) the rolling bodies (4) can be filled into the space between the bearing rings (2, 3), and in which anti-friction bearing (1, 1') the cut-outs (10) can be covered in each case by way of a closure piece (9) which can be fastened reversibly,
in which anti-friction bearing (1, 1') the rolling bodies (4) roll on raceways (18, 19) which are oriented in a manner which is inclined at an angle with respect to the bearing longitudinal axis,
in which anti-friction bearing (1, 1') the respective closure pieces (9) have rims (11) for guiding the rolling bodies (4),
in which anti-friction bearing (1, 1') the run-on face of the rims (11) of the closure pieces (9) is oriented perpendicularly with respect to the rolling body rotational axis (12),
in which anti-friction bearing (1, 1') the rolling bodies (4) of both rolling body rows roll radially on the inside on raceways (18) which are configured on the inner bearing ring (2),
and in which anti-friction bearing (1, 1') the rolling bodies (4) of both rolling body rows roll radially on the outside on raceways (19) which are configured on the outer bearing ring (3), **characterized**
**in that**, in the case of both rolling body rows, the cylindrical rolling bodies (4) are supported in each case by way of their first axial end face directly on in each case one associated rim on the inner bearing ring (2),
**in that** the cylindrical rolling bodies (4) of the two rolling body rows are supported by way of their second end face directly on an associated rim on the outer bearing ring (3) and, in the region of the cut-outs (10), directly on the run-on face of the rim (11) of the respectively associated closure piece (9),
**in that** the closure pieces (9) and the associated cut-outs (10) are so large that cage segments (5) can be introduced into the cut-outs (10), which cage segments (5) have pockets (15) for receiving rolling bodies (4) in a manner which is spaced apart,
**in that** the cage segments (5) are configured in such a way that the complete running face of the rolling body can be utilized,
**in that** the cage segments (5) are configured such that they are bent over radially,
and **in that** the cage segments (5) have a sealing and run-on strip (6).

2. Anti-friction bearing according to Claim 1, **characterized in that** the rolling bodies (4) are set against one another in an O-arrangement, and **in that** the outer bearing ring (3) has two cut-outs (10) which can be covered reversibly by way of in each case one closure piece (9), the closure pieces (9) forming rims (11).

3. Anti-friction bearing according to Claim 1, **characterized in that** the rolling bodies (4) are set against one another in an X-arrangement, and **in that** the inner bearing ring (2) has two cut-outs which can be covered reversibly by way of in each case one closure piece, the closure pieces forming rims.

4. Anti-friction bearing according to one of Claims 1 to 3, **characterized in that** the cut-outs (10) are arranged in a mutually offset manner in relation to the circumference.

5. Anti-friction bearing according to one of Claims 1 to 4, **characterized in that** the closure piece (9) can be fixed reversibly by way of a fixing element (14).

6. Anti-friction bearing according to one of Claims 1 to 5, **characterized in that** the cage segments (5) consist of plastic, brass or aluminium.

7. Anti-friction bearing according to one of Claims 1 to 6, **characterized in that**, at their ends, the cage segments (5) have latching means, by way of which they can be connected to adjacent cage segments (5).

8. Anti-friction bearing (1') according to one of Claims 1 to 7, **characterized in that** the rims (25; 11) on the outer ring (3), on the inner ring (2) and/or on the closure pieces (9) have lubricant pockets (20, 21, 22).

## Revendications

1. Palier à roulement (1, 1') comprenant une bague de palier extérieure d'une seule pièce (3) et une bague de palier intérieure d'une seule pièce (2) ainsi que des corps de roulement cylindriques (4) disposés entre les bagues de palier (2, 3) en deux rangées,
dans lequel la bague de palier extérieure (3) et/ou la bague de palier intérieure (2) présentent du côté frontal deux évidements (10) à travers lesquels les corps de roulement. (4) peuvent être. introduits dans l'espace entre les bagues de palier (2, 3), et dans lequel les évidements (10) peuvent à chaque fois être recouverts avec une pièce de fermeture (9) pouvant être fixée de manière réversible,
dans lequel les corps de roulement (4) roulent sur des chemins de roulement (18, 19) qui sont orientés suivant un angle incliné par rapport à l'axe longitudinal du palier,
dans lequel les pièces de fermeture respectives (9) présentent des bords (11) pour guider les corps de roulement (4),
dans lequel la surface de butée des bords (11) des pièces de fermeture (9) est orientée perpendiculairement à l'axe de rotation des corps de roulement (12),
dans lequel les corps de roulement (4) des deux rangées de corps de roulement roulent radialement à l'intérieur sur des chemins de roulement (18) qui sont réalisés sur la bague de palier intérieure (2),
et dans lequel les corps de roulement (4) des deux rangées de corps de roulement roulent radicalement à l'extérieur sur des chemins de roulement (19) qui sont réalisés sur la bague de palier extérieure (3), **caractérisé en ce que** les corps de roulement cylindriques (4) des deux rangées de corps de roulement s'appuient à chaque fois avec leur première surface frontale axiale directement sur un bord associé au niveau de la bague de palier intérieure (2),
**en ce que** les corps de roulement cylindriques (4) des deux rangées de corps de roulement s'appuient avec leur deuxième surface frontale directement contre un bord associé au niveau de la bague de palier extérieure (3) et dans la région des évidements (10) directement contre la surface de butée du bord (11) de la pièce de fermeture respectivement associée (9),
**en ce que** les pièces de fermeture (9) ainsi que les évidements associés (10) sont suffisamment grands pour que des segments de cage (5) puissent être introduits dans les évidements (10), lesquels présentent des cavités (15) pour recevoir de manière espacée les corps de roulement (4),
**en ce que** les segments de cage (5) sont réalisés de telle sorte que la surface de roulement complète du corps de roulement puisse être utilisée,
**en ce que** les segments de cage (5) sont réalisés-de manière coudée radialement,
et **en ce que** les segments de cage (5) présentent une baguette d'étanchéité ou une baguette de butée (6).

2. Palier à roulement selon la revendication 1, **caractérisé en ce que** les corps de roulement (4) sont inclinés les uns par rapport aux autres suivant un agencement en O, et **en ce que** la bague de palier extérieure (3) présente deux évidements (10) qui peuvent être recouverts de manière. réversible avec une pièce de fermeture respective (9), les pièces de fermeture (9) formant des bords (11).

3. Palier à roulement selon la revendication 1, **caractérisé en ce que** les corps de roulement (4) sont inclinés les uns par rapport aux autres suivant un agencement en X, et **en ce que** la bague de palier intérieure (2) présente deux évidements qui peuvent être recouverts de manière réversible avec une pièce de fermeture respective, les pièces de fermeture formant des bords.

4. Palier à roulement selon l'une quelconque des revendications 1 à 3, **caractérisé en ce que** les évidements (10) sont disposés de manière décalée mutuellement par rapport à la périphérie.

5. Palier à roulement selon l'une quelconque des revendications 1 à 4, **caractérisé en ce que** la pièce de fermeture (9) peut être fixée de manière réversible avec un élément de fixation (14).

6. Palier à roulement selon l'une quelconque des revendications 1 à 5, **caractérisé en ce que** les segments de cage (5) se composent de plastique, de laiton ou d'aluminium.

7. Palier à roulement selon l'une quelconque des revendications 1 à 6, **caractérisé en ce que** les segments de cage (5) présentent à leurs extrémités des moyens d'encliquetage avec lesquels ceux-ci peuvent être connectés à des segments de cage adjacents (5).

8. Palier-à roulement (1') selon l'une quelconque des revendications 1 à 7, **caractérisé en ce que** les bords (25 ; 11) sur la bague extérieure (3), sur la bague intérieure (2) et/ou sur les pièces de fermeture (9) présentent des cavités de lubrifiant (20, 21, 22).
